# EUROPEAN PATENT APPLICATION

(11) **EP 2 175 439 A2**
(43) Date of publication of application: **14.04.2010**
(21) Application number: 09151725.0
(22) Date of filing: 30.01.2009
(51) Int. Cl.: G09G 3/36

(54) **Liquid crystal display (LCD) panel and pixel driving device therefor**

(30) Priority: 23.09.2008 TW 97136443
(71) Applicant: Acer Incorporated, Hsichih, Taipei Hsien 2218, Taiwan (CN)
(72) Inventor: Chen, Chih-Chiang, 22181, Taipei Hsien (TW)
(74) Representative: Jenkins, Peter David

(57) **Abstract**

A pixel driving device (120) for a liquid crystal display (LCD) panel (1) includes first and second transistors (Ta, Tb) and first and second storage capacitors (CstA, CstB). The second transistor (Tb) has a gate electrode (G) coupled to a gate electrode (G) of the first transistor (Ta), and a drain electrode (D) coupled to a drain electrode (D) of the first transistor (Ta). The first storage capacitor (CstA) has a capacitor terminal (104) coupled to a source electrode (S) of the first transistor (Ta). The second storage capacitor (CstB) has a first capacitor terminal (107) coupled to a source electrode (S) of the second transistor (Tb), and a second capacitor terminal (103) coupled to the gate electrode (G) of the first transistor (Ta) of the pixel driving device (120) in another pixel row of the LCD panel (1).

## Description

This invention relates to a liquid crystal display (LCD) panel, more particularly to a pixel driving device for an LCD panel.

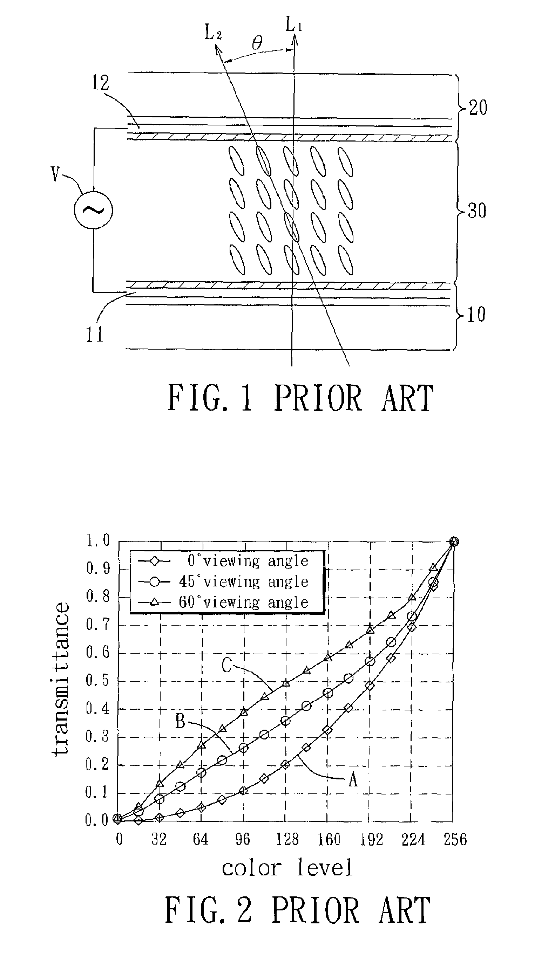

Figure 1 illustrates a conventional liquid crystal display (LCD) panel, such as a twisted nematic (TN) LCD, which includes a thin film transistor (TFT) substrate 10, a color filter substrate 20, and a liquid crystal molecule layer 30 between the TFT substrate 10 and the color filter substrate 20. In operation, when a voltage (V) is applied across a pixel electrode layer 11 on the TFT substrate 10 and a common electrode layer 12 on the color filter substrate 20, liquid crystal molecules in the liquid crystal molecule layer 30 are aligned in a particular direction to thereby adjust a phase delay of the liquid crystal molecule layer 30 relative to a light beam. At this state, when a pair of light beams (Ll, L2), which define an angle (*θ*)therebetween, pass through the liquid crystal molecule layer 30, the light beams (L1, L2) have different phase delays and therefore have different brightness levels. As such, when the angle at which the conventional LCD panel is viewed is changed, the brightness displayed by the conventional LCD panel is also changed, thereby resulting in a problem of color shift.

As can be seen from Figure 2, the conventional LCD panel has different gamma curves (A, B, C) at zero-degree, forty-five-degree, and sixty-degree viewing angles. This indicates that the conventional LCD panel suffers from the color shift problem at oblique viewing angles and therefore has a narrow viewing angle.

In order to widen a viewing angle, an in-plane switching (IPS) LCD panel and a multi-domain vertical alignment (MVA) LCD panel have been developed.

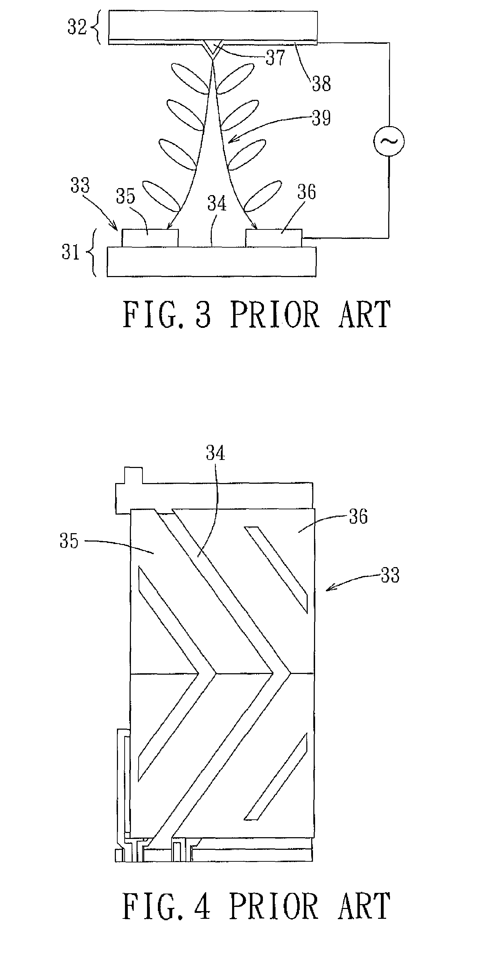

Referring to Figures 3 and 4, the conventional MVA LCD panel includes a TFT substrate 31 and a color filter substrate 32, each of which is formed with a transparent conductive electrode 33, 38 thereon. The transparent conductive electrode 33 on the TFT substrate 31 is formed with a slit 34 therein to thereby divide the transparent conductive electrode 33 into a pair of electrode members 35, 36. The transparent conductive electrode 38 on the color filter substrate 32 is formed with a ridge 37 thereon. The construction as such permits arrangement of liquid crystal molecules in different directions and thus widens a viewing angle of the conventional MVA LCD panel. However, since an electric field 39 is generated between the transparent conductive electrodes 33, 38, which undesirably affects the arrangement of the liquid crystal molecules, the conventional MVA LCD panel suffers from the color shift problem as well when viewed at relatively wide viewing angles.

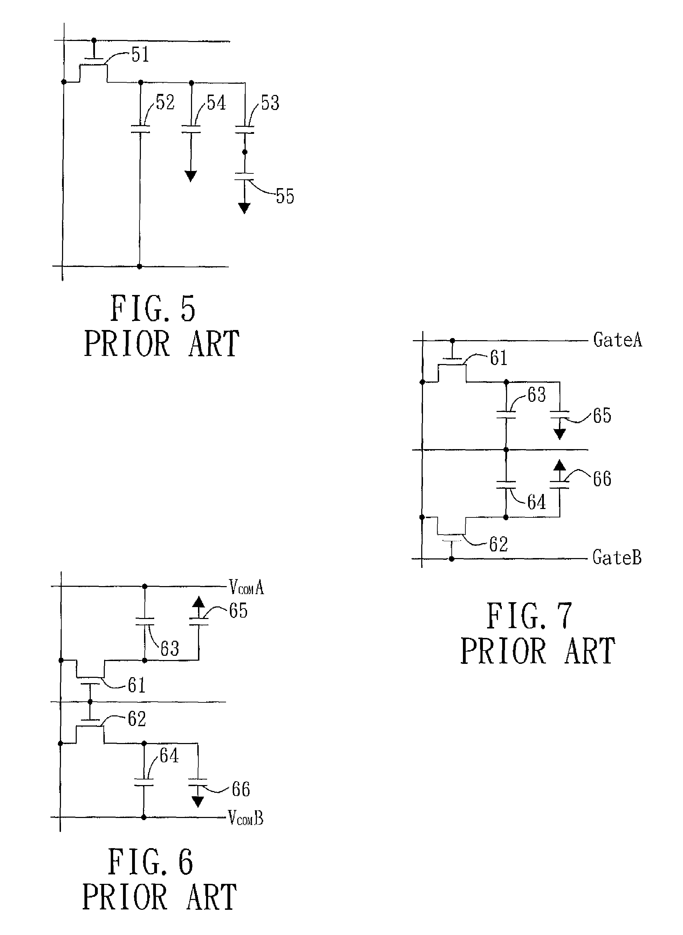

Various conventional pixel driving devices have been proposed for reducing color shift of the conventional MVA LCD panel. One of the conventional pixel driving devices, as illustrated in Figure 5, includes a TFT 51, a storage capacitor 52, a coupling capacitor 53, and first and second liquid crystal capacitors 54, 55. Each of the storage capacitor 52 and the coupling capacitor 53 controls a respective one of the first and second liquid crystal capacitors 54, 55. The electrode members 35, 36, the transparent conductive electrode 38, and the liquid crystal molecules of Figure 3 constitute the first and second liquid crystal capacitors 54, 55. In operation, when the TFT 51 is turned on, the storage capacitor 52 is charged and, in turn, charges the coupling capacitor 53. As a result, the first and second liquid crystal capacitors 54, 55 provide different gamma curves, thereby providing color shift compensation. However, since the coupling capacitor 53 is required to be charged by the storage capacitor 52, appropriate compensation of the color shift cannot be ensured. Furthermore, the conventional pixel driving device can cause residual images on the MVA LCD panel.

Another conventional pixel driving device, as illustrated in Figure 6, includes first and second TFTs 61, 62, first and second storage capacitors 63, 64, and first and second liquid crystal capacitors 65, 66. Each of the first and second storage capacitors 63, 64 is connected to a respective one of common lines (VcomA, VcomB) . Alternatively, as illustrated in Figure 7, each of the first and second TFTs 61, 62 may be connected to a respective one of scan lines (GateA, GateB). In operation, when different voltages are applied to the common lines (VcomA, VcomB) , the first and second storage capacitors 63, 64 generate different voltages. As a result, the first and second liquid crystal capacitors 65, 66 provide different gamma curves. Although this solution mitigates the problem of color shift, the increased number of common lines (VcomA, VcomB) or scan lines (GateA, GateB) complicates the construction of the conventional pixel driving device.

Therefore, the main object of the present invention is to provide a liquid crystal display (LCD) panel that can overcome the aforesaid drawbacks of the prior art.

Another object of the present invention is to provide a pixel driving device that can overcome the aforesaid drawbacks of the prior art.

According to an aspect of the present invention, a pixel driving device for a liquid crystal display (LCD) panel comprises first and second transistors and first and second storage capacitors. The LCD panel includes a plurality of first liquid crystal capacitors and a plurality of second liquid crystal capacitors. The first transistor has a gate electrode, a drain electrode, and a source electrode adapted to be coupled to a respective one of the first liquid crystal capacitors. The second transistor has a gate electrode coupled to the gate electrode of the first transistor, a drain electrode coupled to the drain electrode of the first transistor, and a source electrode adapted to be coupled to a respective one of the second liquid crystal capacitors. The first storage capacitor has a capacitor terminal coupled to the source electrode of the first transistor. The second storage capacitor has a first capacitor terminal coupled to the source electrode of the second transistor, and a second capacitor terminal adapted to be coupled to the gate electrode of the first transistor of the pixel driving device in another pixel row of the LCD panel.

According to another aspect of the present invention, a liquid crystal display (LCD) panel comprises a plurality of first liquid crystal capacitors, a plurality of second liquid crystal capacitors, and a plurality of rows of pixel driving devices. Each of the pixel driving devices includes first and second transistors and first and second storage capacitors. The first transistor has a gate electrode, a drain electrode, and a source electrode coupled to a respective one of the first liquid crystal capacitors. The second transistor has a gate electrode coupled to the gate electrode of the first transistor, a drain electrode coupled to the drain electrode of the first transistor, and a source electrode coupled to a respective one of the second liquid crystal capacitors. The first storage capacitor has a capacitor terminal coupled to the source electrode of the first transistor. The second storage capacitor has a first capacitor terminal coupled to the source electrode of the second transistor, and a second capacitor terminal. The second capacitor terminal of the second storage capacitor of each of the pixel driving devices in one of the rows is coupled to the gate electrode of the first transistor of the pixel driving devices in another one of the rows.

According to yet another aspect of the present invention, a transistor substrate comprises a transparent substrate member, an electrode layer, a plurality of first transistors, a plurality of second transistors, a plurality of first storage capacitors, and a plurality of second storage capacitors. The transparent substrate member defines a plurality of rows of pixel regions. The electrode layer is divided into a plurality of first electrode regions, each of which is disposed in a respective one of the pixel regions, and a plurality of second electrode regions, each of which is disposed in a respective one of the pixel regions. Each of the first transistors is disposed in a respective one of the pixel regions, and has a gate electrode, a drain electrode, and a source electrode coupled to the first electrode region in the respective one of the pixel regions. Each of the second transistors is disposed in a respective one of the pixel regions, and has a gate electrode coupled to the gate electrode of the first transistor in the respective one of the pixel regions, and a source electrode coupled to the second electrode region in the respective one of the pixel regions. Each of the first storage capacitors is disposed in a respective one of the pixel regions, is coupled to the first electrode region in the respective one of the pixel regions, and has a capacitor terminal coupled to the source electrode of the first transistor in the respective one of the pixel regions. Each of the second storage capacitors is disposed in a respective one of the pixel regions, is coupled to the second electrode region in the respective one of the pixel regions, and has a first capacitor terminal coupled to the source electrode of the second transistor in the respective one of the pixel regions, and a second capacitor terminal . The second capacitor terminal of the second storage capacitor in each of the pixel regions in one of the rows is coupled to the gate electrode of the first transistor in one of the pixel regions in another one of the rows.

According to still another aspect of the present invention, a liquid crystal display (LCD) panel comprises a transistor substrate and a color filter substrate. The transistor substrate includes a transparent substrate member, an electrode layer, a plurality of first transistors, a plurality of second transistors, a plurality of first storage capacitors, and a plurality of second storage capacitors. The transparent substrate member defines a plurality of rows of pixel regions. The electrode layer is divided into a plurality of first electrode regions, each of which is disposed in a respective one of the pixel regions, and a plurality of second electrode regions, each of which is disposed in a respective one of the pixel regions. Each of the first transistors is disposed in a respective one of the pixel regions, and has a gate electrode, a drain electrode, and a source electrode coupled to the first electrode region in the respective one of the pixel regions. Each of the second transistors is disposed in a respective one of the pixel regions, and has a gate electrode coupled to the gate electrode of the first transistor in the respective one of the pixel regions, and a source electrode coupled to the second electrode region in the respective one of the pixel regions. Each of the first storage capacitors is disposed in a respective one of the pixel regions, is coupled to the first electrode region in the respective one of the pixel regions, and has a capacitor terminal coupled to the source electrode of the first transistor in the respective one of the pixel regions. Each of the second storage capacitors is disposed in a respective one of the pixel regions, is coupled to the second electrode region in the respective one of the pixel regions, and has a first capacitor terminal coupled to the source electrode of the second transistor in the respective one of the pixel regions, and a second capacitor terminal. The second capacitor terminal of the second storage capacitor in each of the pixel regions in one of the rows is coupled to the gate electrode of the first transistor in one of the pixel regions in another one of the rows. The color filter substrate is disposed on the transistor substrate.

Other features and advantages of the present invention will become apparent in the following detailed description of the preferred embodiment with reference to the accompanying drawings, of which:
Figure 1 is a schematic diagram of a conventional liquid crystal display (LCD) panel;
Figure 2 is a plot illustrating gamma curves of the conventional LCD panel;
Figure 3 is a schematic diagram of a conventional multi-domain vertical alignment (MVA) LCD panel;
Figure 4 is a schematic view illustrating a slit formed in a transparent conductive electrode of the conventional MVA LCD panel;
Figures 5 to 7 are circuit diagrams of conventional pixel driving devices;
Figure 8 is a circuit diagram of the preferred embodiment of an LCD panel according to this invention;
Figure 9 is a fragmentary party sectional view illustrating a pixel driving device of the preferred embodiment;
Figure 10 is a fragmentary partly sectional view taken along line A--A of Figure 9;
Figure 11 is a circuit diagram of the pixel driving device of the preferred embodiment; and
Figure 12 is a plot illustrating gamma curves of the preferred embodiment.

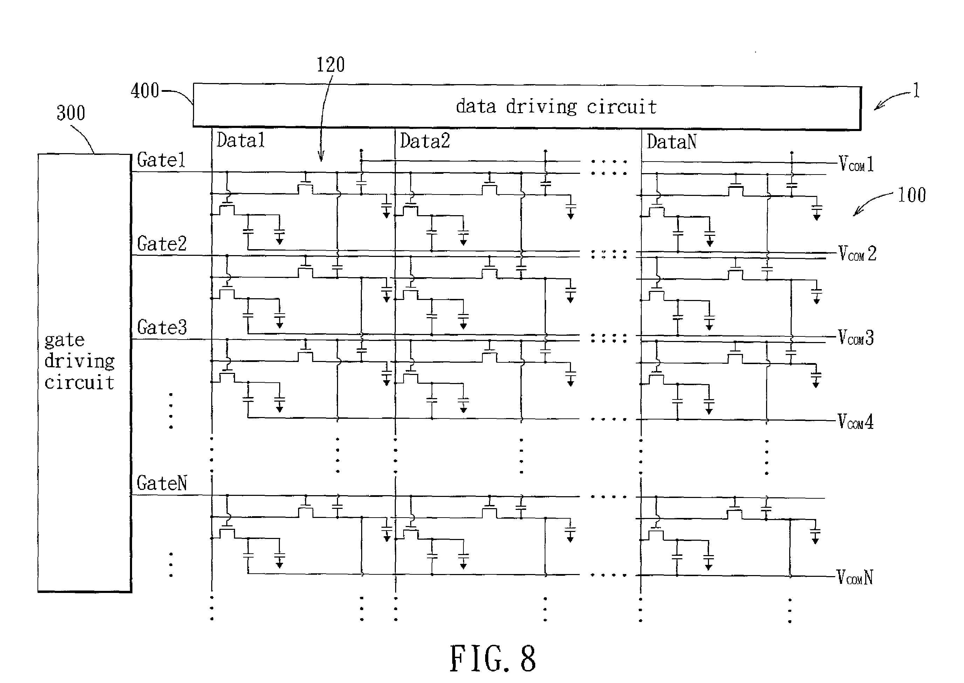

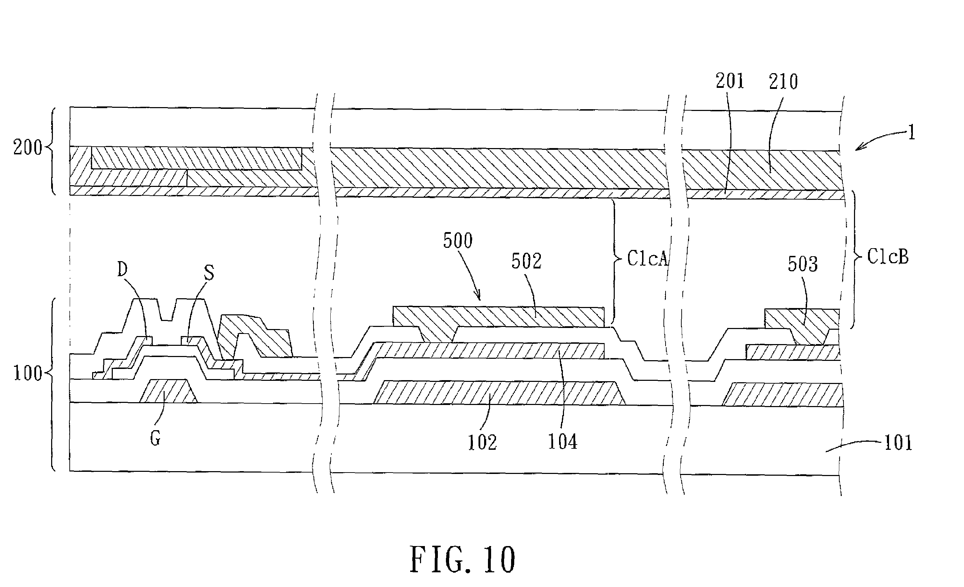

Referring to Figures 8 to 10, the preferred embodiment of a liquid crystal display (LCD) panel 1 according to this invention is shown to include a thin film transistor (TFT) substrate 100 and a color filter substrate 200.

In this embodiment, the LCD panel 1 is a multi-domain vertical alignment (MVA) LCD panel.

The TFT substrate 100 includes a transparent substrate member 101, an electrode layer 500, and a plurality of pixel driving devices 120.

The LCD panel 1 further includes a plurality of parallel scan lines (Gate1 to GateN) that are disposed on the transparent substrate member 101, a plurality of parallel data lines (Data1 to DataN) that are disposed on the transparent substrate member 101 and that intersect the scan lines (Gate1 to GateN) to thereby define a plurality of rows of pixel regions, and a plurality of common lines (Vcom1 to VcomN) that are disposed on the transparent substrate member 101.

The electrode layer 500 of the TFT substrate 100 is divided into a plurality of first electrode regions 502, each of which is disposed in a respective one of the pixel regions, and a plurality of second electrode regions 503, each of which is disposed in a respective one of the pixel regions. In this embodiment, the electrode layer 500 of the TFT substrate 100 is made from an Indium Tin Oxide (ITO).

Each of the pixel driving devices 120 is disposed in a respective one of the pixel regions. Since the pixel driving devices 120 are identical in structure, only the pixel driving device 120 in one of the pixel regions, e.g. the pixel region (Pn), in the Nth row of the pixel regions will be described herein.

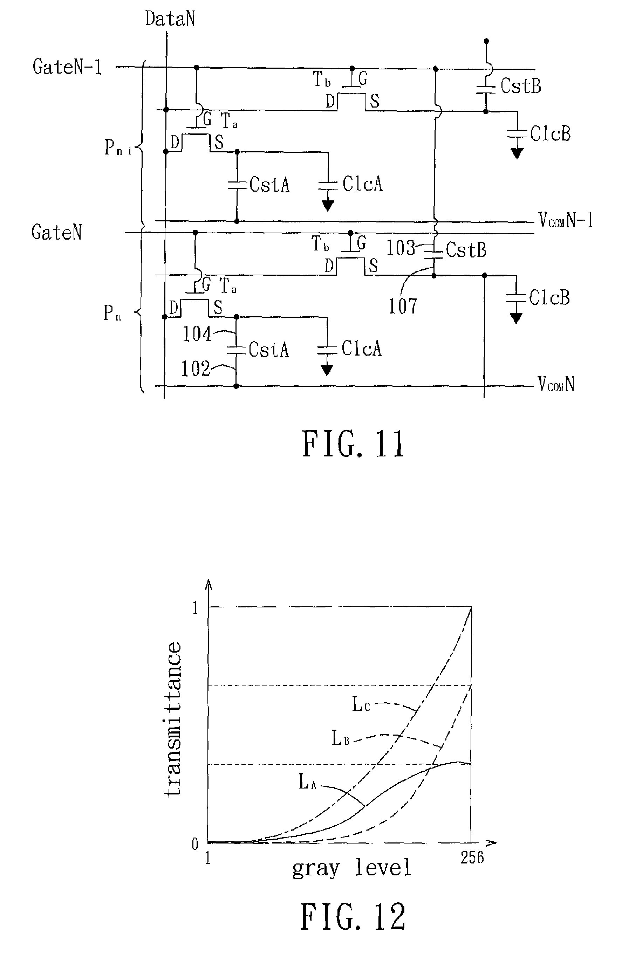

With further reference to Figure 11, the pixel driving device 120 includes first and second transistors (Ta, Tb) and first and second storage capacitors (CstA, CstB) .

The first transistor (Ta) is disposed proximate to a junction of the scan line (GateN) and the data line (DataN) , and has a gate electrode (G) connected to the scan line (GateN), a drain electrode (D) connected to the data line (DataN), and a source electrode (S) connected to the first electrode region 502 in the pixel region (Pn).

The second transistor (Tb) has a gate electrode (G) connected to the scan line (GateN), a drain electrode (D) connected to the data line (DataN), and a source electrode (S) connected to the second electrode region 503 in the pixel region (Pn).

In this embodiment, each of the first and second transistors (Ta, Tb) is a TFT. In an alternative embodiment, each of the first and second transistors (Ta, Tb) is a complementary-metal-oxide semiconductor (CMOS) transistor in a case where the LCD panel is a reflective type.

The first storage capacitor (CstA) has a first capacitor terminal 104 connected to the source electrode (S) of the first transistor (Ta), and a second capacitor terminal 102 connected to the common line (VcomN).

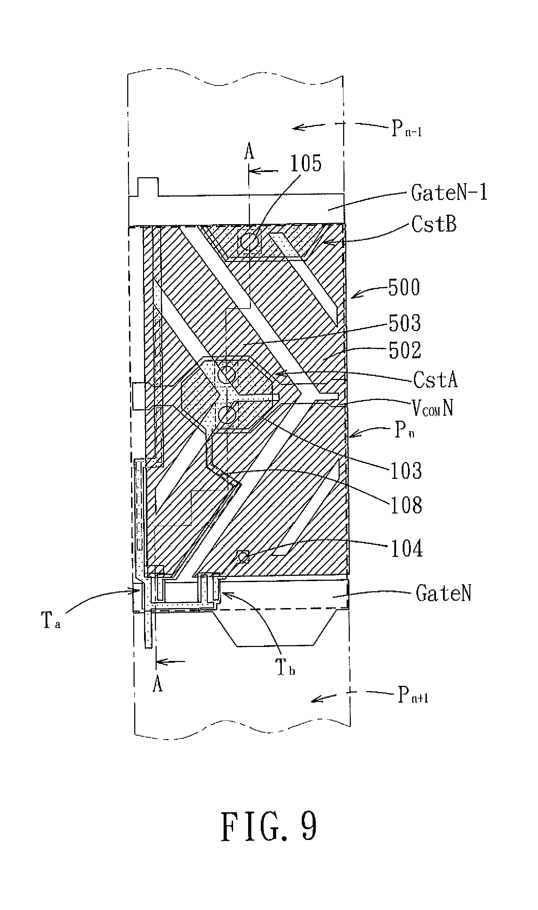

It is noted that the first capacitor terminal 104 of the first storage capacitor (CstA) is connected to the source electrode (S) of the first transistor (Ta) through a conductive wire unit 108, as best shown in Figure 9. The construction as such reduces resistance between the first storage capacitor (CstA) and the first transistor (Ta) without affecting transmittance of the electrode layer 500 of the TFT substrate 100.

In an alternative embodiment, the first capacitor terminal 104 of the first storage capacitor (CstA) is connected to the source electrode (S) of the first transistor (Ta) through a conductive via unit.

The second storage capacitor (CstB) is spaced apart from the first storage capacitor (CstA) and is disposed proximate to the scan line (GateN-1) . In this embodiment, the second storage capacitor (CstB) has a first capacitor terminal 107 connected to the source electrode (S) of the second transistor (Tb), and a second capacitor terminal 103 connected to the scan line (GateN-1).

In an alternative embodiment, the second storage capacitor (CstB) is disposed proximate to the scan line (GateN+1), and the second capacitor terminal 103 thereof is connected to the scan line (GateN+1).

The first capacitor terminal 107 of the second storage capacitor (CstB) is connected to the source electrode (S) of the second transistor (Tb) through a conductive via unit 105, as best shown in Figure 9.

The color filter substrate 200 includes a transparent substrate member 210, and an electrode layer 201 disposed on the transparent substrate member 210. In this embodiment, the electrode layer 201 of the color filter substrate 200, like the electrode layer 500 of the TFT substrate 100, is made from an Indium Tin Oxide (ITO).

The color filter substrate 200 is disposed on the TFT substrate 100 such that a portion of a liquid crystal molecule layer is sandwiched between the electrode layer 201 of the color filter substrate 200 and the first electrode region 502 of the electrode layer 500 of the TFT substrate 100, whereby a first liquid crystal capacitor (ClcA) is formed therebetween, and such that the remaining portion of the liquid crystal molecule layer is sandwiched between the electrode layer 201 of the color filter substrate 200 and the second electrode region 503 of the electrode layer 500 of the TFT substrate 100, whereby a second liquid crystal capacitors (ClcB) is formed therebetween.

The first liquid crystal capacitor (ClcA) is connected to the source electrode (S) of the first transistor (Ta), whereas the second liquid crystal capacitor (ClcB) is connected to the source electrode (S) of the second transistor (Tb).

The LCD panel 1 further includes a gate driving circuit 300 and a data driving circuit 400. The gate driving circuit 300 is connected to the scan lines (Gate1 to GateN), and drives, i.e., activates, the scan lines (Gate1 to GateN) in sequence. The data driving circuit 400 is connected to the data lines (Data1 to DataN), and drives, i.e., to display pixels, the data lines (Data1 to DataN) in sequence.

It is noted that during operation, a voltage of 0-Volt is applied to the common line (Vcom1 to VcomN) . Moreover, a voltage of 5-Volt is applied to the data line (Data1 to DataN) when the data line (Data1 to DataN) is activated. Further, a voltage of 15-Volt/1-Volt is applied to the scan line (Gate1 to GateN) when the scan line (Gate1 to GateN) is activated/deactivated.

In operation, when the scan line (GateN) and the data line (DataN) are activated, each of the first and second transistors (Ta, Tb) conducts, and each of the first and second storage capacitors (CstA, CstB) is charged with the 5-Volt voltage on the data line (DataN) through the respective one of the first and second transistors (Ta, Tb). At this state, since the common line (VcomN) has a 0-volt voltage thereon, the first storage capacitor (CstA) can store a voltage of 5-Volts therein. At the same time, since the scan line (GateN-1) is deactivated and has a 1-Volt voltage thereon, the second storage capacitor (CstB) can store a voltage of 4-Volts therein. As such, since the voltages on the first and second storage capacitors (CstA, CstB) are different, as illustrated in Figure 12, the first and second liquid crystal capacitors (ClcA, ClcB) have different gamma curves (La, Lb), the summation of which results in a gamma curve (Lc). This indicates that the LCD panel 1 of this invention has a reduced color shift (or color washout) problem.

It has thus been shown that the pixel driving device 120 of this invention alleviates the color shift problem, which is typically observed at wide viewing angles, without increasing the number of scan lines or data lines, and therefore has a relatively simple structure.

## Claims

1. A pixel driving device (120) for a liquid crystal display (LCD) panel (1), the LCD panel (1) including a plurality of first liquid crystal capacitors (ClcA) and a plurality of second liquid crystal capacitors (ClcB), said pixel driving device (120) comprising:
a first transistor (Ta) having a gate electrode (G), a drain electrode (D), and a source electrode (S) adapted to be coupled to a respective one of the first liquid crystal capacitors (ClcA);
a second transistor (Tb) having a gate electrode (G) coupled to said gate electrode (G) of said first transistor (Ta), a drain electrode (D) coupled to said drain electrode (D) of said first transistor (Ta), and a source electrode (S) adapted to be coupled to a respective one of the second liquid crystal capacitors (ClcB);
a first storage capacitor (CstA) having a capacitor terminal (104) coupled to said source electrode (S) of said first transistor (Ta); and
a second storage capacitor (CstB) having a first capacitor terminal (107) coupled to said source electrode (S) of said second transistor (Tb) , and a second capacitor terminal (103) adapted to be coupled to said gate electrode (G) of said first transistor (Ta) of said pixel driving device (120) in another pixel row of the LCD panel (1).

2. The pixel driving device (120) as claimed in Claim 1, wherein said second capacitor terminal (103) of said second storage capacitor (CstB) is adapted to be coupled to said gate electrode (G) of said first transistor (Ta) of said pixel driving device (120) in one of a preceding pixel row and a following pixel row of the LCD panel (1).

3. The pixel driving device (120) as claimed in Claim 1, wherein at least one of said first and second transistors (Ta, Tb) is one of a thin film transistor (TFT) and a complementary metal-oxide-semiconductor (CMOS) transistor.

4. The pixel driving device (120) as claimed in Claim 1, wherein said gate electrode (G) of said first transistor (Ta) has a high-level voltage applied thereto when activated and a low-level voltage applied thereto when otherwise,
said first storage capacitor (CstA) further having a second capacitor terminal (102), which has a voltage applied thereto different from the low-level voltage.

5. A liquid crystal display (LCD) panel (1), comprising:
a plurality of first liquid crystal capacitors (ClcA);
a plurality of second liquid crystal capacitors (ClcB); and
a plurality of rows of pixel driving devices (120), each of said pixel driving devices (120) including
a first transistor (Ta) having a gate electrode (G), a drain electrode (D), and a source electrode (S) coupled to a respective one of said first liquid crystal capacitors (ClcA),
a second transistor (Tb) having a gate electrode (G) coupled to said gate electrode (G) of said first transistor (Ta), a drain electrode (D) coupled to said drain electrode (D) of said first transistor (Ta), and a source electrode (S) coupled to a respective one of said second liquid crystal capacitors (ClcB),
a first storage capacitor (CstA) having a capacitor terminal (104) coupled to said source electrode (S) of said first transistor (Ta), and
a second storage capacitor (CstB) having a first capacitor terminal (107) coupled to said source electrode (S) of said second transistor (Tb) , and a second capacitor terminal (103),
said second capacitor terminal (103) of said second storage capacitor (CstB) of each of said pixel driving devices (120) in one of the rows being coupled to said gate electrode (G) of said first transistor (Ta) of said pixel driving devices (120) in another one of the rows.

6. The LCD panel (1) as claimed in Claim 5, wherein said another one of the rows of said pixel driving devices (120) precedes said one of the rows of said pixel driving devices (120).

7. The LCD panel (1) as claimed in Claim 5, wherein said another one of the rows of said pixel driving devices (120) follows said one of the rows of said pixel driving devices (120).

8. The LCD panel (1) as claimed in Claim 5, wherein at least one of said first and second transistors (Ta, Tb) is one of a thin film transistor (TFT) and a complementary metal-oxide-semiconductor (CMOS) transistor.

9. The LCD panel (1) as claimed in Claim 5, wherein said gate electrode (G) of said first transistor (Ta) has a high-level voltage applied thereto when activated and a low-level voltage applied thereto when otherwise,
said first storage capacitor (CstA) further having a second capacitor terminal (102), which has a voltage applied thereto different from the low-level voltage.

10. A transistor substrate (100), comprising:
a transparent substrate member (101) defining a plurality of rows of pixel regions;
an electrode layer (500) divided into a plurality of first electrode regions (502), each of which is disposed in a respective one of said pixel regions, and a plurality of second electrode regions (503), each of which is disposed in a respective one of said pixel regions;
a plurality of first transistors (Ta), each of which is disposed in a respective one of said pixel regions, each of said first transistors (Ta) having a gate electrode (G), a drain electrode (D), and a source electrode (S) coupled to said first electrode region (502) in the respective one of said pixel regions;
a plurality of second transistors (Tb), each of which is disposed in a respective one of said pixel regions, each of said second transistors (Tb) having a gate electrode (G) coupled to said gate electrode (G) of said first transistor (Ta) in the respective one of said pixel regions, and a source electrode (S) coupled to said second electrode region (503) in the respective one of said pixel regions;
a plurality of first storage capacitors (CstA), each of which is disposed in a respective one of said pixel regions and is coupled to said first electrode region (502) in the respective one of said pixel regions, each of said first storage capacitors (CstA) having a capacitor terminal (104) coupled to said source electrode (S) of said first transistor (Ta) in the respective one of said pixel regions; and
a plurality of second storage capacitors (CstB), each of which is disposed in a respective one of said pixel regions and is coupled to said second electrode region (503) in the respective one of said pixel regions, each of said second storage capacitors (CstB) having a first capacitor terminal (107) coupled to said source electrode (S) of said second transistor (Tb) in the respective one of said pixel regions, and a second capacitor terminal (103),
said second capacitor terminal (103) of said second storage capacitor (CstB) in each of said pixel regions in one of the rows being coupled to said gate electrode (G) of said first transistor (Ta) in one of said pixel regions in another one of the rows.

11. The transistor substrate (100) as claimed in Claim 10, wherein said another one of the rows of said pixel regions precedes said one of the rows of said pixel regions, and each of said second storage capacitors (CstB) is disposed proximate to said another one of the rows of said pixel regions.

12. The transistor substrate (100) as claimed in Claim 10, wherein said another one of the rows of said pixel regions follows said one of the rows of said pixel regions, and each of said second storage capacitors (CstB) is disposed proximate to said another one of the rows of said pixel regions.

13. The transistor substrate (100) as claimed in Claim 10, wherein at least one of said first and second transistors (Ta, Tb) is one of a thin film transistor (TFT) and a complementary metal-oxide-semiconductor (CMOS) transistor.

14. The transistor substrate (100) as claimed in Claim 10, further comprising a conductive via unit (105), which establishes connection between said source electrode (S) of each of said second transistors (Tb) and said first capacitor terminal (107) of a respective one of said second storage capacitors (CstB).

15. A liquid crystal display (LCD) panel (1), comprising:
a transistor substrate (100) including
a transparent substrate member (101) defining a plurality of rows of pixel regions,
an electrode layer (500) divided into a plurality of first electrode regions (502), each of which is disposed in a respective one of said pixel regions, and a plurality of second electrode regions (503), each of which is disposed in a respective one of said pixel regions,
a plurality of first transistors (Ta), each of which is disposed in a respective one of said pixel regions, each of said first transistors (Ta) having a gate electrode (G), a drain electrode (D), and a source electrode (S) coupled to said first electrode region (502) in the respective one of said pixel regions,
a plurality of second transistors (Tb), each of which is disposed in a respective one of said pixel regions, each of said second transistors (Tb) having a gate electrode (G) coupled to said gate electrode (G) of said first transistor (Ta) in the respective one of said pixel regions, and a source electrode (S) coupled to said second electrode region (503) in the respective one of said pixel regions,
a plurality of first storage capacitors (CstA), each of which is disposed in a respective one of said pixel regions and is coupled to said first electrode region (502) in the respective one of said pixel regions, each of said first storage capacitors (CstA) having a capacitor terminal (104) coupled to said source electrode (S) of said first transistor (Ta) in the respective one of said pixel regions, and
a plurality of second storage capacitors (CstB), each of which is disposed in a respective one of said pixel regions and is coupled to said second electrode region (503) in the respective one of said pixel regions, each of said second storage capacitors (CstB) having a first capacitor terminal (107) coupled to said source electrode (S) of said second transistor (Tb) in the respective one of said pixel regions, and a second capacitor terminal (103),
said second capacitor terminal (103) of said second storage capacitor (CstB) in each of said pixel regions in one of the rows being coupled to said gate electrode (G) of said first transistor (Ta) in one of said pixel regions in another one of the rows; and
a color filter substrate (200) disposed on said transistor substrate (100).

16. The LCD panel (1) as claimed in Claim 15, wherein said transistor substrate (100) further includes a conductive wire unit (108), said capacitor terminal (104) of each of said first storage capacitors (CstA) being coupled to said source electrode (S) of the respective one of said first transistors (Ta) through said conductive wire unit (108).

17. The LCD panel (1) as claimed in Claim 15, further comprising a liquid crystal molecule layer sandwiched between said transistor substrate (100) and said color filter substrate (200).

18. The LCD panel (1) as claimed in Claim 17, wherein said color filter substrate (200) includes a transparent substrate member (210), and an electrode layer (201) disposed on said transparent substrate member (210),
a portion of said liquid crystal molecule layer being sandwiched between said electrode layer (201) of said color filter substrate (200) and said first electrode regions (502) of said electrode layer (500) of said transistor substrate (100) to form first liquid crystal capacitors (ClcA) coupled to said source electrodes (S) of said first transistors (Ta), respectively,
the remaining portion of said liquid crystal molecule layer being sandwiched between said electrode layer (201) of said color filter substrate (200) and said second electrode regions (503) of said electrode layer (500) of said transistor substrate (100) to form second liquid crystal capacitors (ClcB) coupled to said source electrodes (S) of said second transistors (Tb), respectively.

19. The LCD panel (1) as claimed in Claim 15, wherein said first storage capacitor (CstA) is disposed under said first electrode region (502) in the respective one of said pixel regions of said electrode layer (500), and said second storage capacitor (CstB) is disposed under said second electrode region (503) in the respective one of said pixel regions of said electrode layer (500).

20. The LCD panel (1) as claimed in Claim 15, wherein said another one of the rows of said pixel regions precedes said one of the rows of said pixel regions, and each of said second storage capacitors (CstB) is disposed proximate to said another one of the rows of said pixel regions.

21. The LCD panel (1) as claimed in Claim 15, wherein said another one of the rows of said pixel regions follows said one of the rows of said pixel regions, and each of said second storage capacitors (CstB) is disposed proximate to said another one of the rows of said pixel regions.

22. The LCD panel (1) as claimed in Claim 15, wherein at least one of said first and second transistors (Ta, Tb) is one of a thin film transistor (TFT) and a complementary metal-oxide-semiconductor (CMOS) transistor.

23. The LCD panel (1) as claimed in Claim 15, wherein said transistor substrate (100) further includes a conductive via unit (105), which establishes connection between said source electrode (S) of each of said second transistors (Tb) and said first capacitor terminal (107) of a respective one of said second storage capacitors (CstB).
